# EUROPEAN PATENT SPECIFICATION

(11) **EP 0 333 843 B1**
(45) Date of publication and mention of the grant of the patent: **10.02.1993**
(21) Application number: 88909062.7
(22) Date of filing: 01.10.1988
(51) Int. Cl.: G11B 5/66

(54) **MAGNETIC MEDIUM FOR LONGITUDINAL RECORDING**
MAGNETISCHER TRÄGER FÜR LONGITUDINALE AUFZEICHNUNG
SUPPORT MAGNETIQUE D'ENREGISTREMENT LONGITUDINAL

(30) Priority: 05.10.1987 US 103965
(43) Date of publication of application: 27.09.1989
(73) Proprietor: DIGITAL EQUIPMENT CORPORATION, Maynard Massachusetts 01754-1418 (US)
(72) Inventor: MALLARY, Michael, L., Berlin, MA 01503 (US)
(74) Representative: Goodman, Christopher
(86) International application number: US8803453
(87) International publication number: WO8903112

(56) References cited:
- EP-A- 0 178 685
- WO-A-87/03728
- DE-B- 1 153 069
- IBM Technical Disclosure Bulletin, volume 23, no. 7A, December 1980, (New York, US), T.N. Kennedy: "Magnetic recording disk with buried servo layer", pages 2949-2950, see figure 2; page 2949, line 13, page 2950, line 4.
- Patent Abstracts of Japan, volume 8, no. 183 (P-296)(1620), 23 August 1984

## Description

### Background of the Invention

This invention relates to a magnetic medium for longitudinal recording which suppresses off-track fringing signals that interfere with accurate readback of data on a track of interest.

As a recording head flies over a track of data, flux from this track and adjacent tracks is detected during a read operation. In the past, adjacent tracks were separated by a wide enough intertrack space to make the flux reaching the head from an adjacent track insignificant compared to the flux from the track of interest. The problem of adjacent track interference becomes more severe when track density is high. In this case the signal of interest is relatively weak and the adjacent track is sufficiently close that its flux is significant.

In WO-A-87/03728 there is described a magnetic record media having an overlying or underlying magnetically saturable high permeability keeper layer in addition to a high coercivity magnetic layer in which signals are stored.

In EP-A-0178685 there is described a magnetic recording medium suitable for use in a perpendicular magnetization mode including a non-magnetic base, a low coercive force layer on the base, and an overlying magnetic recording layer.

In DE-A-1153069 there is also described a magnetic recording medium suitable for use in a perpendicular magnetization mode which comprises a non-magnetic substrate, a soft magnetic layer on the base and a "hard" magnetic layer.

In IBM Technical Disclosure Bulletin there is described a magnetic recording medium with buried servo layer having coercivity decreasing with increasing thickness.

### Summary of the Invention

According to one aspect of the invention a magnetic medium for longitudinal recording includes a soft magnetic layer separated from the hard magnetic recording layer by a non-magnetic buffer layer. It is preferred that the thickness of the soft magnetic layer be greater than the thickness of the hard magnetic recording layer. A suitable magnetic thickness for the soft magnetic layer is approximately 30% thicker than the hard magnetic layer. The magnetic thickness is equal to the product of the geometric thickness and the remnant magnetization. It is also preferred that the non-magnetic layer thickness be in the range of 0.5 to 2 times the effective fly height of the magnetic head. In yet another aspect of the invention, the soft magnetic layer has low permeability to avoid shorting out the head poles which reduces head efficiency.

In another aspect of the invention, the head generates magnetic fields during read to saturate the soft magnetic layer in the medium so as to cancel the effect of the image charges below the head. This technique will allow the use of very thin buffer layers and will facilitate using a two-pole head to read.

A uniaxial anisotropy is induced in a radial direction in the soft magnetic layer of the medium of this invention. The uniaxial anisotropy may be induced by an applied magnetic field during deposition, by annealing the medium in a magnetic field after deposition, by controlling the angle of incidence during vacuum deposition, or by pretexturing the substrate on which the soft magnetic layer is deposited.

### Brief Description of the Drawing

The single figure of the drawing is a cross-sectional view of the magnetic medium.

### Description of the Preferred Embodiment

First of all, the theory on which the present invention is based will be discussed in conjunction with the figure of the drawing. A magnetic medium 10 includes a hard magnetic recording layer 12, a nonmagnetic buffer layer 14, and a soft magnetic underlayer 16. To understand the effect of the soft magnetic layer 16, it is best to think in terms of the theory of "virtual" images. The magnetization of the hard magnetic layer 12 is treated as a series of discreet magnetic charges 18. These "charges" (+) located in the hard magnetic layer 12 behave as if they induce negative image charges (-i) within the soft magnetic layer 16. In a conventional medium, charges in a track 20 adjacent to a track 22 beneath a head 24 would interfere with the ability of the head 24 to read the track 22 information accurately. (The medium 10 is generally configured as a disc, and motion of the medium 10 is into or out of the plane of the figure.) Because of the soft magnetic layer 16, charges in the hard magnetic layer 12 at the track 20 induce negative image charges 26. When the thicknesses of the layers 14 and 16 are small, the distance from the negative image charges 26 to the head 24 is only slightly greater than the distance to the head 24 from the charges in the hard magnetic layer 12. These distances are illustrated by the dashed lines 28 and 30, respectively. Thus, the signal from the soft magnetic layer 16 image is almost as strong as that from the hard layer 12 but opposite in sign. The two signals nearly cancel any effect on the adjacent track 22 which is being read by the head 24.

When the head 24 is directly above the track 22 of interest, the situation becomes very complex. This is the case because the head is also made from a soft magnetic material and will have image charges induced in it. These induced virtual charges in the head in turn induce virtual charges in the soft magnetic layer 16 and so on. The head thus sees an infinite series of repeating image charges similar in effect to the infinite series of images seen when one looks at the reflection of a mirror in another mirror. Although one would expect such an effect to result in cancellation of the signal from the track of interest, the applicant herein has determined this not to be the case. An exact analysis indicates only a weak suppression of the high frequency on-track signal (eg at 30 kfri [1.18 kilo flux reversals per mm] with an effective fly height of 10 microinches [250 micrometers] and a non-magnetic buffer layer 14 thickness of 10 microinches [250 micrometers] the loss of high frequency amplitude to the buffer layer is 11.6%).
The net effect of the magnetic medium 10 is that off-track interference is reduced while the signal from the track of interest is only slightly affected. The suppression of low frequency signals is much greater than that of high frequency signals so the resolution (high frequency amplitude divided by low frequency amplitude) is also improved without resorting to electronic equalization which usually amplifies the noise as well.

The thickness of the nonmagnetic buffer layer 14 may range from zero to roughly the distance of closest approach of the head to an adjacent track. Optimum performance under ordinary conditions will be obtained in the thickness range from 0.5 to two times the effective fly height. The effective fly height is equal to the sum of the actual fly height of the head, F, the pole tip recession, the thickness of any overcoat layer over the hard magnetic layer 12, and one-half the thickness of the hard magnetic layer 12. As the nonmagnetic layer is made thinner, off-track signal suppression increases but on-track high frequency amplitude decreases. An engineering tradeoff must be made between these two effects. The soft magnetic layer 16 should be slightly greater in magnetic thickness than that of the hard layer (e.g., 30% greater) so that it can absorb all of the flux from the off-track signal without saturating. If it is made too thick, however, this layer suppresses the write process in proportion to its thickness.

When a two-pole head is used to read (a three-pole head is preferred), two potential problems may arise. A first problem is that the pole corners will generate strong negative dips (e.g., 25% of the isolated signal for buffer thickness equal to effective fly height). This situation can be remedied either by electronic equalization or by beveling the pole corners so that the dips are softened. A second problem is that the soft layer 16 will tend to short out the poles and reduce the head efficiency. To overcome this problem and reduce the negative dip problem, the permeability of the soft magnetic layer 16 can be deliberately reduced resulting in a semisoft layer. This will decrease the strength of the high order images but will also reduce the pole shorting effect. Finally, as another alternative, a weak magnetic field may be applied to the medium during a read, at a strength large enough to saturate the soft layer and so to cancel the effect of the image charges below the head, but not strong enough to affect the hard magnetic recording layer. This technique would allow the use of very thin buffer layers and would also help with the problems associated with using a two-pole head to read.

The magnetic medium according to the invention is made by beginning with a polished Ni-P on aluminum standard substrate. A soft magnetic layer such as NiFe is deposited on the substrate. As stated above, the thickness of the soft magnetic layer should be approximately 30% greater than the head magnetic layer to be deposited later. A uniaxial anisotropy is induced in a radial direction (the medium will normally be disc-shaped) in the soft magnetic layer by applying a field during deposit, by performing an anneal in a magnetic field later, by controlling the angle of incidence in the case of vacuum deposition, or by pretexturing the substrate. If a semisoft layer is desired (for two-pole head operation), then a high Hk alloy such as NiFeCo, NiCo, or CoZr is used. A nonmagnetic buffer layer (e.g., Ni-P for plating or Cr for sputtering) is next deposited. The thickness of this layer is in the range of 0.5 to two times the effective fly height. A hard longitudinal magnetic layer is then deposited by conventional means and finally an overcoat is deposited.

The magnetic medium of the present invention reduces fringing at high track density and improves resolution. When a three-pole head is used, the fringing is so strongly suppressed that the bottom pole can be made significantly oversized. In this way the need for on-wafer track trimming of the whole head is eliminated.

It is recognized that modifications and variations of the present invention will occur to those skilled in the art and it is intended that all such modifications and variations be included within the scope of the appended claims.

## Claims

1. Magnetic medium that includes a magnetic recording layer constructed to record information in a longitudinal direction therein, characterized in that said medium includes a second magnetic layer disposed beneath said magnetic recording layer and being magnetically soft relative to said magnetic recording layer, and a non-magnetic layer disposed between said magnetic recording layer and said second, soft magnetic layer.

2. Magnetic recording medium for use with a head for recording information thereon and reading information therefrom, said medium including a magnetic recording layer constructed to record information in a longitudinal direction therein, characterized in that said medium includes a second magnetic layer disposed beneath said magnetic recording layer, said second magnetic layer being magnetically soft relative to said magnetic recording layer and adapted to remain unsaturated during reading.

3. The medium of claim 2, further including a non-magnetic layer between the soft magnetic layer and the magnetic recording layer.

4. The medium of claim 1 or 2, wherein the thickness of the soft magnetic layer is greater than the thickness of the magnetic recording layer.

5. The medium of claim 4, wherein the magnetic thickness of the second soft magnetic layer is approximately 30% greater than the hard magnetic layer.

6. The medium of claim 1 or 3, wherein the non-magnetic layer thickness is in the range of 0.5 to two times the effective fly height of a magnetic head.

7. Magnetic medium for recording in a system in which a head passes over the medium at an effective fly height, said magnetic medium including a magnetic recording layer disposed adjacent to the head; and constructed to record information in a longitudinal direction therein, characterized in that medium further comprises:
a non-magnetic layer beneath the magnetic recording layer; and
a second magnetic layer disposed beneath the non-magnetic layer and being magnetically soft relative to said magnetic recording layer.

8. The medium of claim 7, wherein the soft, second magnetic layer thickness is greater than the hard magnetic layer thickness.

9. The medium of claim 7, wherein the non-magnetic layer thickness is in the range of 0.5-2 times the effective fly height.

10. The medium of claim 1 or claim 2, wherein the second soft magnetic layer has low permeability relative to that of said magnetic recording layer.

11. Method for making a recording medium comprising:
depositing a soft magnetic layer on a substrate, said soft magnetic layer being generally circular in shape;
inducing a uniaxial anisotropy in a radial direction in the soft magnetic layer, relative to said generally circular shape;
depositing a non-magnetic layer on the soft magnetic layer; and
depositing a magnetic recording layer on the non-magnetic layer, and configuring said magnetic recording layer to have a magnetic hardness greater than that of said soft magnetic layer and to record information in a longitudinal direction therein.

12. The method of claim 11, wherein the uniaxial anisotropy is induced by an applied magnetic field during deposition.

13. The method of claim 11 wherein the uniaxial anisotropy is induced by annealing the medium in a magnetic field.

14. The method of claim 11, wherein the uniaxial anisotropy is induced by controlling the angle of incidence during vacuum deposition.

15. The method of claim 11, wherein the uniaxial anisotropy is induced by pretexturing the substrate.

16. The medium of claim 1 or 3, wherein the non-magnetic layer is NiP.

17. The medium of claim 1 or claim 3 wherein the second soft magnetic layer is NiFe.

18. The medium of claim 1 or claim 3, wherein the second soft magnetic layer is NiFeCo.

19. The medium of claim 1 or claim 3, wherein the second soft magnetic layer is NiCo.

20. The medium of claim 1 or claim 3, wherein the second soft magnetic layer is CoZr.

21. The medium of claim 1 or claim 3, wherein the non-magnetic layer is Cr.

22. the medium of claim 1 or claim 3, wherein the second soft magnetic layer has a uniaxial anisotropy.

23. the medium of claim 24, wherein the uniaxial anisotropy is in a radial direction.

## Patentansprüche

1. Magnetisches Medium, das eine magnetische Aufzeichnungsschicht hat, die dafür ausgelegt ist, Informationen in Longitudinalrichtung aufzuzeichnen, dadurch gekennzeichnet, daß das Medium eine zweite magnetische Schicht, die unterhalb der magnetischen Aufzeichnungsschicht angeordnet ist und magnetisch weich gegenüber der magnetischen Aufzeichnungsschicht ist, und eine nicht-magnetische Schicht enthält, die zwischen der magnetischen Aufzeichnungsschicht und der zweiten, weichmagnetischen Schicht angeordnet ist.

2. Medium für magnetische Aufzeichnung zur Verwendung mit einem Kopf zum Aufzeichnen von Informationen auf dem Medium und zum Lesen von Informationen von dem Medium, wobei das Medium eine magnetische Aufzeichnungsschicht hat, die dazu ausgelegt ist, Informationen in Longitudinalrichtung aufzuzeichnen, dadurch gekennzeichnet, daß das Medium eine zweite Magnetschicht enthält, die unterhalb der magnetischen Aufzeichnungsschicht angeordnet ist, wobei die zweite magnetische Schicht magnetisch weich gegenüber der magnetischen Aufzeichnungsschicht ist und dafür ausgelegt ist, während des Lesens ungesättigt zu bleiben.

3. Medium nach Anspruch 2, das weiterhin eine nicht-magnetische Schicht zwischen der weichmagnetischen Schicht und der magnetischen Aufzeichnungsschicht enthält.

4. Medium nach Anspruch 1 oder 2, worin die Dicke der weichmagnetischen Schicht größer ist als die Dicke der magnetischen Aufzeichnungsschicht.

5. Medium nach Anspruch 4, worin die magnetische Dicke der zweiten, weichmagnetischen Schicht ungefähr 30% größer ist als die der hartmagnetischen Schicht.

6. Medium nach Anspruch 1 oder 3, worin die Dicke der nicht-magnetischen Schicht im Bereich von 0,5 bis zweimal der effektiven Flughöhe eines Magnetkopfes ist.

7. Magnetisches Medium zum Aufzeichnen in einem System, in dem sich ein Kopf über dem Medium mit einer effektiven Flughöhe bewegt, wobei das magnetische Medium eine magnetische Aufzeichnungsschicht enthält, die benachbart zu dem Kopf angeordnet ist und dazu ausgelegt ist, Informationen in der Longitudinalrichtung darin aufzuzeichnen, dadurch gekennzeichnet, daß das Medium weiterhin aufweist:
eine nicht-magnetische Schicht unterhalb der magnetischen Aufzeichnungsschicht; und
eine zweite magnetische Schicht, die unterhalb der nicht-magnetischen Schicht angeordnet ist und gegenüber der magnetischen Aufzeichnungsschicht magnetisch weich ist.

8. Medium nach Anspruch 7, worin die Dicke der zweiten, weichmagnetischen Schicht größer ist als die Dicke der hartmagnetischen Schicht.

9. Medium nach Anspruch 7, worin die Dicke der nicht-magnetischen Schicht im Bereich von 0,5 bis zweimal der effektiven Flughöhe ist.

10. Medium nach Anspruch 1 oder Anspruch 2, worin die zweite, weichmagnetische Schicht eine niedrige Permeabilität gegenüber der Permeabilität der magnetischen Aufzeichnungsschicht hat.

11. Verfahren zum Herstellen eines Aufzeichnungsmediums, das aufweist:
Aufbringen einer weichmagnetischen Schicht auf einem Substrat, wobei die weichmagnetische Schicht im allgemeinen von kreisförmiger Form ist;
Erzeugen einer einachsigen Anisotropie in radialer Richtung in der weichmagnetischen Schicht, und zwar relativ zu der im allgemeinen kreisförmigen Form;
Aufbringen einer nicht-magnetischen Schicht auf der weichmagnetischen Schicht;
Aufbringen einer magnetischen Aufzeichnungsschicht auf der nicht-magnetischen Schicht und Konfigurieren der magnetischen Aufzeichnungsschicht, damit sie eine magnetische Härte hat, die größer als die der weichmagnetischen Schicht ist, und damit in ihr Informationen in einer longitudinalen Richtung aufgezeichnet werden können.

12. Verfahren nach Anspruch 11, worin die einachsige Anisotropie von einem angelegten Magnetfeld während des Aufbringens hervorgerufen wird.

13. Verfahren nach Anspruch 11, worin die einachsige Anisotropie durch Ausheilen des Mediums in einem Magnetfeld hervorgerufen wird.

14. Verfahren nach Anspruch 11, worin die einachsige Anisotropie durch Steuern des Auftreffwinkels während der Vakuumabscheidung hervorgerufen wird.

15. Verfahren nach Anspruch 11, worin die einachsige Anisotropie durch Vortexturieren des Substrats hervorgerufen wird.

16. Medium nach Anspruch 1 oder 3, worin die nicht-magnetische Schicht aus NiP besteht.

17. Medium nach Anspruch 1 oder nach Anspruch 3, worin die zweite, weichmagnetische Schicht aus NiFe besteht.

18. Medium nach Anspruch 1 oder Anspruch 3, worin die zweite, weichmagnetische Schicht aus NiFeCo besteht.

19. Medium nach Anspruch 1 oder Anspruch 3, worin die zweite, weichmagnetische Schicht aus NiCo besteht.

20. Medium nach Anspruch 1 oder Anspruch 3, worin die zweite, weichmagnetische Schicht aus CoZr besteht.

21. Medium nach Anspruch 1 oder Anspruch 3, worin die nicht-magnetische Schicht aus Cr besteht.

22. Medium nach Anspruch 1 oder Anspruch 3, worin die zweite, weichmagnetische Schicht eine einachsige Anisotropie hat.

23. Medium nach Anspruch 24, worin die einachsige Anisotropie in radialer Richtung vorliegt.

## Revendications

1. Support magnétique qui comprend une couche magnétique d'enregistrement réalisée pour enregistrer des informations dans une direction longitudinale de celle-ci, caractérisé en ce que ledit support comprend une seconde couche magnétique disposée au-dessous de ladite couche magnétique d'enregistrement et étant magnétiquement douce par rapport à ladite couche magnétique d'enregistrement, et une couche non magnétique disposée entre ladite couche magnétique d'enregistrement et ladite seconde couche magnétique douce.

2. Support magnétique d'enregistrement pour l'utiliser avec une tête pour l'enregistrement d'informations sur celle-ci et la lecture d'informations sur celle-ci, ledit support incluant une couche magnétique d'enregistrement réalisée pour enregistrer des informations dans une direction longitudinale de celle-ci, caractérisé en ce que ledit support comprend une seconde couche magnétique disposée au-dessous de ladite couche magnétique d'enregistrement, ladite seconde couche magnétique étant magnétiquement douce par rapport à ladite couche magnétique d'enregistrement et adaptée pour rester non saturée pendant une lecture.

3. Support selon la revendication 2, incluant en outre une couche non magnétique entre la couche magnétique douce et la couche magnétique d'enregistrement.

4. Support selon l'une quelconque des revendications 1 et 2, dans lequel l'épaisseur de la couche magnétique douce est plus grande que l'épaisseur de la couche magnétique d'enregistrement.

5. Support selon la revendication 4, dans lequel l'épaisseur magnétique de la seconde couche magnétique douce est approximativement supérieure de 30% à celle de la couche magnétique dure.

6. Support selon l'une quelconque des revendications 1 et 3, dans lequel l'épaisseur de la couche non magnétique est comprise entre 0,5 et deux fois la hauteur de flottement effective d'une tête magnétique.

7. Support magnétique pour un enregistrement dans un système où une tête passe sur le support à une hauteur de flottement effective, ledit support magnétique incluant une couche magnétique d'enregistrement disposée au voisinage de la tête; et réalisée pour enregistrer des informations dans une direction longitudinale de celle-ci, caractérisé en ce que le support comprend en outre:
une couche non magnétique au-dessous de la couche magnétique d'enregistrement; et
une seconde couche magnétique disposée au-dessous de la couche non magnétique et étant magnétiquement douce par rapport à ladite couche magnétique d'enregistrement.

8. Support selon la revendication 7, dans lequel la seconde couche magnétique douce a une épaisseur plus grande que l'épaisseur de la couche magnétique dure.

9. Support selon la revendication 7, dans lequel l'épaisseur de la couche non magnétique est comprise entre 0,5 et 2 fois la hauteur de flottement effective.

10. Support selon l'une quelconque des revendications 1 et 2, dans lequel la seconde couche magnétique douce à une faible perméabilité par rapport à celle de ladite couche magnétique d'enregistrement.

11. Méthode pour réaliser un support d'enregistrement consistant à:
déposer une couche magnétique douce sur un substrat, ladite couche magnétique douce ayant une forme circulaire dans son ensemble;
induire une anisotropie uniaxiale dans une direction radiale dans la couche magnétique douce, par rapport à ladite forme circulaire dans son ensemble;
déposer une couche non magnétique sur la couche magnétique douce; et à
déposer une couche magnétique d'enregistrement sur la couche non magnétique, et donner à ladite couche magnétique d'enregistrement une configuration pour qu'elle ait une dureté magnétique supérieure à celle de ladite couche magnétique douce et pour enregistrer des informations dans une direction longitudinale de celle-ci.

12. Méthode selon la revendication 11, dans laquelle l'anisotropie uniaxiale est induite par un champ magnétique appliqué pendant un dépôt.

13. Méthode selon la revendication 11, dans laquelle l'anisotropie uniaxiale est induite par recuit du support dans un champ magnétique.

14. Méthode selon la revendication 11, dans laquelle l'anisotropie uniaxiale est induite en contrôlant l'angle d'incidence pendant un dépôt sous vide.

15. Méthode selon la revendication 11, dans laquelle l'anisotropie uniaxiale est induite en donnant préalablement une texture au substrat.

16. Support selon l'une quelconque des revendications 1 et 3, dans lequel la couche non magnétique est une couche de NiP.

17. Support selon l'une quelconque des revendications 1 et 3, dans lequel la seconde couche magnétique douce est une couche de NiFe.

18. Support selon l'une quelconque des revendications 1 et 3, dans lequel la seconde couche magnétique douce est une couche de NiFeCo.

19. Support selon l'une quelconque des revendications 1 et 3, dans lequel la seconde couche magnétique douce est une couche de NiCo.

20. Support selon l'une quelconque des revendications 1 et 3, dans lequel la seconde couche magnétique douce est une couche de CoZr.

21. Support selon l'une quelconque des revendications 1 et 3, dans lequel la couche non magnétique est une couche de Cr.

22. Support selon l'une quelconque des revendications 1 et 3, dans lequel la seconde couche magnétique douce a une anisotropie uniaxiale.

23. Support selon la revendication 22, dans lequel l'anisotropie uniaxiale est dans une direction radiale.
